# DEMANDE DE BREVET EUROPEEN

(11) **EP 3 339 125 A1**
(43) Date de publication de la demande: **27.06.2018**
(21) Numéro de dépôt: 17209584.6
(22) Date de dépôt: 21.12.2017
(51) Int. Cl.: B60W 30/18, B60W 10/198, B60W 10/06

(54) **PROCÉDÉ ET DISPOSITIF DE FREINAGE RÉCUPÉRATIF**

(30) Priorité: 22.12.2016 FR 1663225
(71) Demandeur: Valeo Systemes de Controle Moteur, 95800 Cergy Saint Christophe (FR)
(72) Inventeur: ANGELOT, Pierre-Julian, 95800 CERGY SAINT CHRISTOPHE (FR); COPPIN, Olivier, 95800 CERGY SAINT CHRISTOPHE (FR)

(57) **Abrégé**

Procédé et dispositif de récupération d'énergie destiné à être appliqué à un véhicule équipé d'un moteur à combustion interne (3), au cours duquel au moins un dispositif de récupération d'énergie (15) est mis en oeuvre par des gaz d'échappement (63) du moteur à combustion interne (3) et où un dispositif de pilotage (22) contrôle le dispositif de récupération d'énergie (15), caractérisé en ce que le dispositif de récupération d'énergie (15) est placé en un mode de récupération d'énergie par le dispositif de pilotage (22) quand le véhicule est en phase de décélération.

## Description

L'invention a trait au domaine de la récupération d'énergie pour les véhicules, notamment automobiles. Elle concerne plus particulièrement la récupération d'énergie opérée dans une situation de ralentissement du véhicule.

Un véhicule équipé d'un moteur à combustion interne peut être équipé d'un système de récupération de l'énergie disposé à l'échappement du moteur à combustion interne. C'est notamment le cas pour certains véhicules de type poids lourds ou bus de transport de passagers. Un tel système de récupération d'énergie est mis en oeuvre pendant les phases de combustion du moteur, correspondant au moment où le moteur à combustion interne génère une traction. Le système profite ainsi pleinement de la thermique particulièrement élevée présente à l'échappement pendant ces phases. Ce système de récupération d'énergie n'est cependant pas mis en oeuvre pendant les phases de décélération du véhicule. Dans une telle situation et selon les dispositifs connus actuellement, le système de récupération d'énergie est contourné et ne récupère donc pas d'énergie.

En parallèle de ces situations, le véhicule équipé d'un tel système de récupération d'énergie comprend un dispositif de freinage dont la fonction est d'arrêter le véhicule. Un tel dispositif de freinage peut être épaulé par ce qu'il est connu d'appeler le frein moteur. On sait que l'utilisation du frein moteur soulage le dispositif de freinage, de sorte que sa fiabilité et sa durée de vie peuvent être allongées.

L'invention part de ces constats et propose de récupérer l'énergie libérée à l'échappement du moteur à combustion interne pendant les phases de décélération du véhicule, le système de récupération d'énergie participant également au ralentissement du véhicule en augmentant volontairement un phénomène de contre-pression sur les pistons de moteur à combustion interne.

L'invention a ainsi pour objet un procédé et/ou un système de récupération d'énergie applicable à tous véhicules dont le déplacement est généré par un moteur à combustion interne. C'est par exemple le cas d'un véhicule automobile léger et c'est également le cas d'un véhicule automobile lourd.

L'invention vise donc un procédé de récupération d'énergie destiné à être appliqué à un véhicule équipé d'un moteur à combustion interne, au cours duquel au moins un dispositif de récupération d'énergie est mis en oeuvre par des gaz d'échappement du moteur à combustion interne et où un dispositif de pilotage contrôle le dispositif de récupération d'énergie, innovant en ce que le dispositif de récupération d'énergie est placé en un mode de récupération d'énergie par le dispositif de pilotage quand le véhicule est en phase de décélération, et avantageusement uniquement pendant cette phase.

Le mode de récupération d'énergie correspond à un état du dispositif de récupération d'énergie où il est tiré parti de la vitesse des gaz d'échappement pendant la phase de décélération, autrement appelée phase de ralentissement. Bien que ces gaz d'échappement soit en quantité inférieure à une phase de combustion, il subsiste un flux non négligeable dans la conduite d'échappement que le système de récupération d'énergie exploite pour opérer un générateur électrique, et simultanément créer une contre-pression formant un frein moteur. La phase de décélération correspond à toutes situations où il est demandé au véhicule de réduire son allure, que cela soit de manière brutale ou sur une longue phase de ralentissement.

Selon d'autres caractéristiques de l'invention, prises seules ou en combinaison, on pourra prévoir que :
- la phase de décélération est détectée par une demande de ralentissement du véhicule,
- la demande de ralentissement provient d'une commande d'un organe de freinage du véhicule,
- la commande d'un organe de freinage est un appui sur une pédale de frein du véhicule et/ou une activation d'un ralentisseur, notamment un frein électromagnétique,
- la demande de ralentissement provient d'un système de géolocalisation équipant le véhicule,
- la demande de ralentissement correspond à une coupure d'une injection de carburant dans le moteur à combustion interne,
- la demande de ralentissement provient d'un dispositif de détection d'obstacle connecté au véhicule, et avantageusement installé sur le véhicule,
- le dispositif de récupération d'énergie comprend au moins une turbine entrainée en rotation par les gaz d'échappement et un générateur électrique opéré par la turbine,
- le dispositif de pilotage contrôle un débit de gaz d'échappement circulant dans le dispositif de récupération d'énergie,
- le dispositif de pilotage contrôle le dispositif de récupération d'énergie par un différentiel de pressions entre une première pression en amont du dispositif de récupération d'énergie et une deuxième pression en aval du dispositif de récupération d'énergie,
- le procédé comprend une étape de détermination de l'état opérationnel et/ou courant de l'un quelconque des composants ci-dessous :
   a. un système de freinage du véhicule,
   b. le dispositif de récupération d'énergie,
   c. un système de limitation du freinage du véhicule,
- on détermine une puissance de freinage récupératif à atteindre par le dispositif de récupération d'énergie pour ralentir le véhicule selon la demande de ralentissement,
- le dispositif de récupération d'énergie est placé en un mode d'arrêt par le dispositif de pilotage si la puissance de freinage récupératif à atteindre est inférieure à un premier seuil,
- le dispositif de récupération d'énergie est placé en mode de récupération d'énergie par le dispositif de pilotage si la puissance de freinage récupératif à atteindre est supérieure au premier seuil,
- on contrôle le dispositif de récupération d'énergie par le dispositif de pilotage pour que sa puissance de freinage récupératif courante soit égale à la puissance de freinage récupératif à atteindre,
- on compare une puissance de freinage récupératif maximum que le dispositif de récupération d'énergie est apte à fournir avec une puissance de freinage correspondant à la phase de décélération et on active au moins un organe de freinage du véhicule si la puissance de freinage récupératif maximum que le dispositif de récupération d'énergie peut fournir est inférieure à la puissance de freinage correspondant à la phase de décélération,
- on compare une puissance de freinage récupératif maximum que le dispositif de récupération d'énergie est apte à générer avec une puissance de freinage correspondant à la phase de décélération et on interdit l'activation d'au moins un organe de freinage du véhicule si la puissance de freinage récupératif maximum que le dispositif de récupération d'énergie peut fournir est supérieure à la puissance de freinage correspondant à la phase de décélération.

L'invention vise également un système récupératif d'énergie pour un véhicule équipé d'un moteur à combustion interne, comprenant au moins un dispositif de récupération d'énergie mis en oeuvre par des gaz d'échappement du moteur à combustion interne et un dispositif de pilotage du dispositif de récupération d'énergie, caractérisé en ce qu'il comprend un module de contrôle configuré pour recevoir une demande de décélération du véhicule et pour envoyer une demande de récupération d'énergie par le dispositif de récupération d'énergie.

Le système récupératif d'énergie peut mettre en oeuvre l'une quelconque des étapes du procédé exposées plus avant. Le système récupératif d'énergie peut également comprendre l'une quelconque des caractéristiques suivantes, prises seules ou en combinaison :
- le dispositif de récupération d'énergie comprend au moins une turbine agencée pour être placée dans un flux des gaz d'échappement et un générateur électrique relié à la turbine,
- la turbine est une turbine à géométrie variable comprenant un ensemble d'ailettes, cet ensemble d'ailettes formant au moins en partie le dispositif de pilotage,
- alternativement ou cumulativement, le dispositif de pilotage comprend au moins un circuit de contournement du dispositif de récupération d'énergie apte à être parcouru par au moins une partie du flux de gaz d'échappement,
- le circuit de contournement comprend au moins une conduite et une valve de contrôle de la circulation de gaz d'échappement dans la conduite,
- le dispositif de récupération d'énergie comprend un turbocompresseur dont l'arbre est relié à un générateur électrique,
- le dispositif de récupération d'énergie est configuré pour être installé sur un circuit de gaz d'échappement du moteur à combustion interne entre ce dernier et un dispositif antipollution des gaz d'échappement,
- le dispositif de récupération d'énergie est configuré pour être installé sur un circuit de gaz d'échappement du moteur à combustion interne entre un turbocompresseur et un dispositif antipollution des gaz d'échappement,
- le dispositif de récupération d'énergie est configuré pour être installé sur un circuit de gaz d'échappement du moteur à combustion interne entre ce moteur à combustion interne et un turbocompresseur,
- le dispositif de récupération d'énergie est configuré pour être installé sur un circuit de gaz d'échappement du moteur à combustion interne en aval d'un dispositif antipollution des gaz d'échappement, selon le sens de circulation des gaz d'échappement dans le circuit de gaz d'échappement.

L'invention exposée ci-dessus, que cela soit par son procédé de récupération d'énergie ou par son système récupératif d'énergie, permet d'une part, de réduire les sollicitations du système de freinage mécanique qui équipe classiquement un véhicule, et d'autre part de réduire la consommation globale en carburant, par une réutilisation de l'énergie récupérée pendant les phases de décélération. Une telle récupération est par exemple électrique, notamment pour alimenter au moins un auxiliaire électrique du véhicule en lieu et place ou au soutien d'un alternateur, contribuer à la charge d'une batterie ou encore contribuer au maintien de la tension de bord. Dans un autre cas de récupération mécanique, la puissance emmagasinée pendant les phases de décélération peut être réutilisée mécaniquement pour soulager l'effort de traction du moteur à combustion interne, une telle récupération mécanique pouvant s'appuyer sur un circuit hydraulique ou pneumatique du véhicule.

D'autres caractéristiques et avantages de la présente invention apparaitront plus clairement à la lecture de la description et à l'étude des figures parmi lesquelles :
- la figure 1 est une représentation schématique d'un ensemble de propulsion d'un véhicule automobile, où un système récupératif d'énergie est installé en différentes positions de l'ensemble de propulsion ;
- la figure 2 est un graphe illustrant la répartition de puissance de freinage appliquée à la décélération pour un véhicule équipé d'un système récupératif d'énergie ;
- la figure 3 est un logigramme illustrant le procédé selon l'invention ;
- la figure 4 est un logigramme précisant l'une des étapes du procédé illustrée à la figure 3.

Dans la description qui suit, les termes amont et aval sont utilisés pour expliquer le positionnement relatif d'un composant par rapport à un autre. Ces termes s'analysent selon le sens de circulation du fluide considéré, par exemple les gaz d'admission ou les gaz d'échappement d'un moteur à combustion interne.

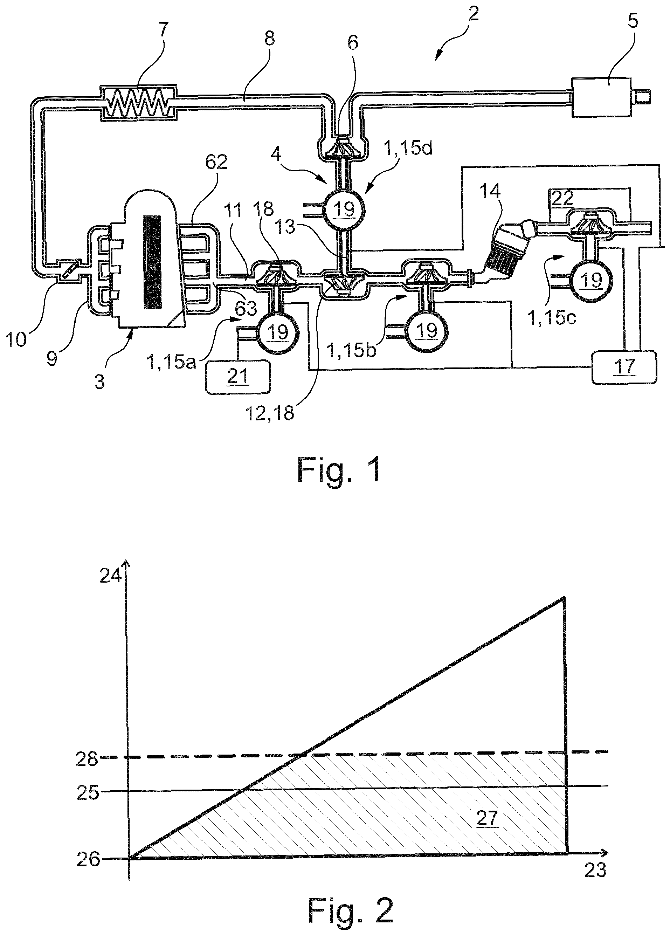

La figure 1 montre un système récupératif d'énergie intégré à un ensemble de propulsion 2 d'un véhicule, notamment automobile. Le système récupératif d'énergie est globalement référencé 1 et il comprend au moins un dispositif de récupération d'énergie 15 dont la position spécifique sur l'ensemble de propulsion 2 est différenciée par des indices a à d.

L'ensemble de propulsion 2 comprend un moteur à combustion interne 3 qui peut par exemple être un moteur à allumage commandé ou un moteur à allumage par compression. Dans l'un ou l'autre de ces deux cas, le moteur à combustion interne 3 peut être du type atmosphérique, ou suralimenté par un compresseur ou un turbocompresseur 4.

Côté admission, l'ensemble de propulsion 2 comprend un filtre à air d'admission 5 disposé en amont d'une roue de compression 6 du turbocompresseur 4. En aval de la roue de compression 6 est prévu un refroidisseur 7 d'air suralimenté, cet air suralimenté formant un flux de gaz d'admission référencé 8. Le moteur à combustion interne 3 comprend un collecteur d'admission 9 destiné à répartir les gaz d'admission en entrée de chacun des cylindres. Le volume de gaz d'admission admis à l'intérieur du moteur à combustion interne est placé sous la dépendance d'un volet d'admission 10 interposé dans le circuit d'admission entre le refroidisseur 7 d'air suralimenté et le collecteur d'admission 9.

Côté échappement, l'ensemble de propulsion 2 comprend un collecteur d'échappement 62 destiné à rassembler des gaz d'échappement 63 de chacun des cylindres pour alimenter une conduite d'échappement 11. Cette dernière reçoit une roue d'entrainement 12 du turbocompresseur 4, qui est reliée à la roue de compression 6 par l'intermédiaire d'un arbre 13. La conduite d'échappement 11 est également raccordée à un dispositif antipollution 14 chargé de traiter les gaz d'échappement pour en réduire la toxicité. Le collecteur d'échappement 62, la conduite d'échappement 11 et le dispositif antipollution 14 forment au moins en partie un circuit de gaz d'échappement du moteur à combustion interne 3.

Selon l'invention, le système récupératif d'énergie 1 comprend au moins le dispositif de récupération d'énergie 15, un dispositif de pilotage 22 représenté symboliquement sur la figure 1 configuré pour commander le mode de fonctionnement du dispositif de récupération d'énergie 15, et un module de contrôle 17 capable d'une part, de recevoir au moins une information image d'une demande de décélération du véhicule, et d'autre part de délivrer une demande de récupération d'énergie par le dispositif de récupération d'énergie 15, quand le véhicule est en phase de décélération.

Le dispositif de récupération d'énergie 15 est installé sur la conduite d'échappement 11 de sorte à pouvoir être activé par le flux des gaz d'échappement 63. Selon un premier exemple de positionnement, le dispositif de récupération d'énergie, référencé ici 15a, est positionné entre le moteur à combustion interne 3 et le turbocompresseur 4. Plus précisément, ce dispositif de récupération d'énergie 15a est disposé entre le collecteur d'échappement 62 et la roue d'entraînement 12 du turbocompresseur 4.

Selon un deuxième exemple de positionnement, le dispositif de récupération d'énergie, référencé ici 15b, est positionné entre le turbocompresseur 4 et le dispositif antipollution 14. Plus précisément, ce dispositif de récupération d'énergie 15b est disposé en aval de la roue d'entraînement 12 du turbocompresseur 4, et en amont du dispositif antipollution 14.

Selon un troisième exemple de positionnement, le dispositif de récupération d'énergie, référencé ici 15c, est positionné dans le circuit de gaz d'échappement 63 après le dispositif antipollution 14, c'est-à-dire en aval de ce dernier.

Selon un quatrième exemple de positionnement, le dispositif de récupération d'énergie, référencé ici 15d, est positionné au niveau du turbocompresseur 4. Dans un tel cas, l'arbre 13 du turbocompresseur 4 est agencé pour mettre en mouvement le dispositif de récupération d'énergie 15d. C'est par le biais de la roue d'entrainement 12 du turbocompresseur 4 que le dispositif de récupération d'énergie 15d est opéré. On peut ainsi considérer que le dispositif de récupération d'énergie 15d intègre ou comprend le turbocompresseur 4.

Quelle que soit la position du dispositif de récupération d'énergie 15 sur le circuit de gaz d'échappement, ce denier est constitué au moins d'une turbine 18 et d'un générateur 19, par exemple électrique, hydraulique ou pneumatique. La suite de la description sera faite en rapport avec un générateur électrique, mais il est entendu qu'un générateur hydraulique ou un générateur pneumatique, par exemple une pompe, pourront se substituer au générateur électrique. La description du dispositif de récupération d'énergie 15 est réalisée avec le premier exemple de positionnement, mais il est également entendu que cette description est transposable à l'un quelconque des deuxième ou troisième exemples de positionnement.

La turbine 18 est placée dans le circuit de gaz d'échappement, de sorte que le flux de ces derniers entraine la turbine 18 en rotation. La turbine 18 est reliée mécaniquement au générateur électrique 19, qui prend ici par exemple la forme d'un moteur électrique. Un tel générateur électrique 19, quand il est entrainé par les gaz d'échappement 63 en phase de décélération, génère un courant électrique qui peut être stocké dans une batterie 21 qui équipe le véhicule. La force électromotrice créée dans une telle situation génère une force sur la turbine 18, qui s'oppose à sa rotation. Cette limitation de la rotation de la turbine 18 vient alors s'opposer au flux de gaz d'échappement, générant ainsi une contre-pression pour le moteur à combustion interne 3, et par conséquent un frein moteur pour le véhicule.

En ce qui concerne le quatrième exemple de positionnement, la turbine 18 prend ici la fonction de la roue d'entrainement 12 à l'égard du turbocompresseur 4, ces deux composants ne formant alors qu'une seule pièce. L'arbre 13 du turbocompresseur 4 est ainsi relié mécaniquement au générateur 19, de manière à générer un courant électrique qui peut être stocké dans la batterie 21 qui équipe le véhicule, selon le processus expliqué ci-dessus.

Le dispositif de récupération d'énergie évoqué dans les exemples plus avant peut être placé dans une multiplicité de modes, parmi lesquels on trouve un mode de récupération d'énergie et un mode d'arrêt de récupération d'énergie. Des états intermédiaires aux premier et deuxième modes sont bien entendu envisageable, de manière à ne récupérer qu'une partie de l'énergie maximum que le dispositif de récupération est susceptible de récupérer.

Ces modes sont placés sous la dépendance d'un dispositif de pilotage 22 illustré schématiquement sur la figure 1 au niveau du troisième exemple de positionnement du dispositif de récupération d'énergie 15c. Bien entendu, ce dispositif de pilotage 22 est transposable à l'un quelconque des exemples de positionnement du dispositif de récupération d'énergie 15.

Selon un exemple de réalisation, le dispositif de pilotage 22 commande ou pilote le mode de fonctionnement du dispositif de récupération d'énergie 15 selon un principe de contrôle du débit de gaz d'échappement 63 dans la turbine 18 et/ou selon un principe de contrôle d'un rapport de pressions entre une pression de gaz d'échappement 63 en amont de la turbine 18 et une pression de gaz d'échappement 63 en aval de la même turbine 18.

Dans le cas où le dispositif de pilotage 22 contrôle le débit de gaz d'échappement 63 circulant dans le dispositif de récupération d'énergie 15, ce dispositif de pilotage 22 comprend alors au moins un circuit de contournement du dispositif de récupération d'énergie 15, notamment de sa turbine 18, de sorte à autoriser un passage de gaz d'échappement 63 qui n'agit pas sur cette turbine 18. Le circuit de contournement est alors parcouru par au moins une partie du flux de gaz d'échappement et cette circulation de gaz d'échappement 63 est placée sous la dépendance d'au moins un organe de contrôle de cette circulation, par exemple une valve de contrôle de la circulation de gaz d'échappement 63 associée à un conduit de circulation. En contournant le dispositif de récupération d'énergie 15, on contrôle la quantité d'énergie récupérée par ce dernier tout en contrôlant simultanément le frein moteur appliqué au véhicule.

Dans le cas où le dispositif de pilotage 22 contrôle le rapport de pressions entre une pression de gaz d'échappement 63 en amont de la turbine 18 et une pression de gaz d'échappement 63 en aval de la même turbine 18, un tel pilotage est opéré par un ensemble d'ailettes d'une turbine à géométrie variable. La turbine 18 du dispositif de récupération d'énergie 15 est alors une turbine à géométrie variable. Les ailettes sont articulées de manière à générer une variation de l'angle d'incidence et de la quantité de gaz d'échappement 63 entrant dans une roue de turbine constitutive de la turbine à géométrie variable. Ce faisant, la quantité d'énergie récupérée pendant la phase de décélération peut être commandée, tout en agissant également sur la contre-pression que la turbine 18 génère sur le moteur à combustion interne 3.

Dans le cas du dispositif de récupération d'énergie 15d qui forme également la partie échappement du turbocompresseur 4, ce dernier peut être associé à l'ensemble d'ailettes exposé ci-dessus, formant ainsi un turbocompresseur à géométrie variable récupérateur d'énergie.

La figure 2 montre un effet de l'invention. Le graphe montré ici illustre en abscisse un niveau de décélération 23 souhaité ou déterminé par le véhicule, et en ordonnée la puissance de freinage totale 24 sur le véhicule équipé de l'invention, une telle puissance étant une combinaison de la puissance de freinage récupératif offerte par le dispositif de récupération d'énergie tel qu'expliqué ci-dessus avec une puissance de freinage générée par un organe de freinage classique équipant le véhicule, tel que par exemple le frein hydraulique appliqué aux roues ou un ralentisseur, par exemple sous forme d'un frein électromagnétique.

Quand une demande de décélération est détectée, l'invention prévoit de privilégier l'utilisation du freinage récupératif selon l'invention, avant d'utiliser le freinage classique. C'est pourquoi, il est déterminé une puissance de freinage récupératif à atteindre 25 que le dispositif de récupération d'énergie doit récupérer pour aligner le frein moteur sur la demande en ralentissement. Cette puissance de freinage récupératif à atteindre 25 est comprise entre un premier seuil 26 et une valeur correspondant à une puissance de freinage récupératif maximum 28 que peut générer le dispositif de récupération d'énergie.

Le dispositif de récupération d'énergie est placé en un mode d'arrêt par le dispositif de pilotage dès lors que la puissance de freinage récupératif à atteindre 25 est en dessous du premier seuil 26. Il s'agit par exemple d'un cas où est pris en compte des paramètres tels que la température de la turbine ou du générateur électrique, et d'une manière générale leur disponibilité, ou encore le niveau de freinage demandé, ou encore le niveau de charge de la batterie du véhicule. Si la température de la turbine ou du générateur est supérieure à un niveau déterminé, le dispositif de pilotage place le dispositif de récupération d'énergie en mode arrêt, de manière à le laisser refroidir. De manière similaire et si la demande de freinage est trop faible, le dispositif de pilotage place le dispositif de récupération d'énergie en mode arrêt. De manière similaire encore et si la batterie du véhicule est totalement chargée, il devient alors impossible de stocker l'énergie récupérer et le procédé prévoit alors une mise à l'arrêt du dispositif de récupération de l'énergie.

Dès lors que ce premier seuil 26 est franchi, le dispositif de récupération d'énergie est placé dans un mode de récupération d'énergie et corrélativement de génération d'un frein moteur. Ce mode de récupération d'énergie est illustré par le secteur 27 de la figure 2. Dans une variante de mise en oeuvre du procédé, on interdit l'utilisation d'un organe de freinage du véhicule, quand la puissance de freinage récupératif à atteindre 25 est inférieure à la puissance de freinage récupératif maximum 28 que le dispositif de récupération d'énergie peut fournir. Le procédé fait la constatation que la puissance de freinage générée par le dispositif de récupération d'énergie suffit à ralentir ou freiner le véhicule, en fonction de la demande de décélération détectée.

Le procédé objet de l'invention fait l'emploi d'un seuil correspondant à la puissance de freinage récupératif maximum 28 que le dispositif de récupération d'énergie peut fournir qui, lorsqu'il est franchi, autorise le recours à l'organe de freinage classique équipant le véhicule. Le procédé prévoit ainsi une comparaison entre la puissance de freinage récupératif à atteindre 25 et la puissance de freinage récupératif maximum 28 que le dispositif de récupération d'énergie peut fournir, et active l'organe de freinage si la puissance de freinage récupératif à atteindre 25 est supérieure à la puissance de freinage récupératif maximum 28 que le dispositif de récupération d'énergie peut fournir. On fait ici la constatation que le dispositif de récupération d'énergie n'est pas en mesure de freiner à lui seul le véhicule, par le biais du frein moteur qu'il génère. C'est pourquoi, il est fait recours au freinage classique pour ralentir le véhicule, en complément du freinage opéré par le frein moteur et mis en oeuvre par le dispositif de récupération d'énergie selon l'invention.

Tel qu'expliqué ci-dessus, l'organe de freinage classique est soulagé, ce qui contribue à allonger sa durée de vie. En parallèle, le procédé permet de récupérer une énergie, par exemple électrique, qui pourra être utilisée ultérieurement, notamment pendant les phases de combustion du moteur à combustion interne, permettant ainsi de réduire sa consommation de carburant.

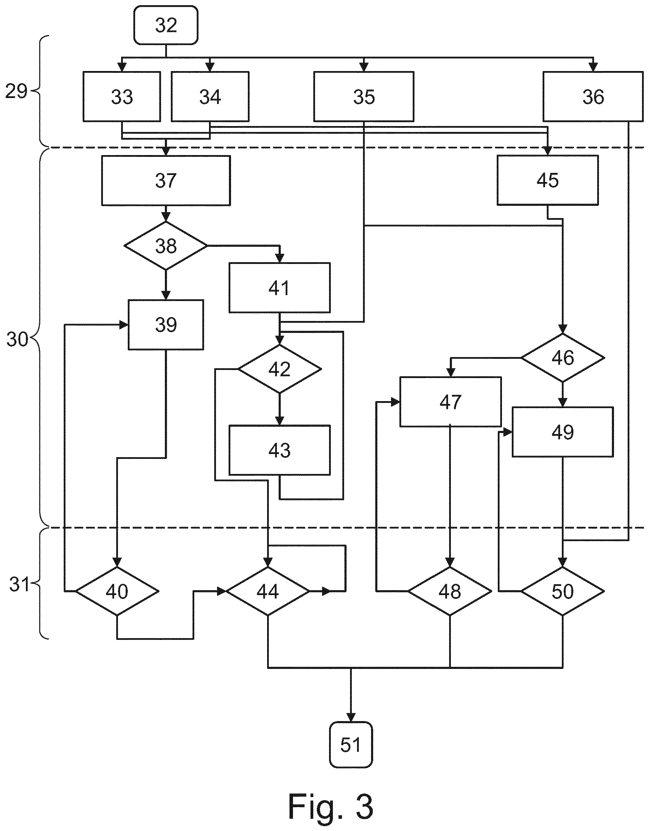

La figure 3 illustre un logigramme décisionnel image d'un exemple de mise en oeuvre du procédé. Selon cet exemple, le procédé comprend un premier groupe 29 d'étapes de détermination de l'état du système récupératif d'énergie, un deuxième groupe 30 d'étapes de calcul et un troisième groupe 31 d'étapes de vérification de l'atteinte des consignes.

Le procédé selon l'invention débute par une demande de ralentissement 32 du véhicule. Cette demande de ralentissement 32 symbolise la phase de décélération, notamment son début. Elle peut être détectée par un contacteur de pédale de frein et/ou un capteur de pression du circuit hydraulique de frein et/ou un actionnement manuel d'un ralentisseur, notamment un frein électromagnétique, et/ou un système de géolocalisation équipant le véhicule et/ou un dispositif de détection d'obstacle connecté au véhicule, quand celui-ci est extérieur au véhicule, ou intégré au véhicule quand il est embarqué sur celui-ci. Cette demande de ralentissement peut encore être détectée par une coupure d'une injection de carburant dans le moteur à combustion interne.

Le premier groupe 29 d'étapes de détermination de l'état du système récupératif d'énergie comprend une pluralité d'étapes individuels opérées en série ou simultanément. Une étape 33 est une détermination de l'état opérationnel des systèmes de freinage qui équipent le véhicule. Cette étape 33 de détermination de l'état opérationnel des systèmes de freinage prend en compte l'état courant du dispositif de récupération d'énergie, par exemple la température du générateur électrique, et/ou l'état opérationnel du système de freinage hydraulique du véhicule, notamment l'état d'usure des plaquettes de frein, ou la pression dans le circuit hydraulique.

Une étape 34 correspond à une limitation de la demande de ralentissement telle qu'elle est formulée à l'étape de demande de ralentissement 32. Une telle étape 34 de limitation de la demande de ralentissement prend en compte une requête en provenance par exemple du système d'ABS et/ou d'ESP, qui tendrait à limiter le freinage pour garantir la tenue de route du véhicule.

Une étape 35 correspond à une détermination de l'état courant du dispositif de récupération d'énergie. Une telle étape 35 mesure ou détermine la puissance courante à un instant donné du dispositif de récupération d'énergie. Cette étape forme un point de départ qui permet de déterminer la puissance de freinage récupératif maximum que le dispositif de récupération d'énergie peut fournir en vue de ralentir ou freiner le véhicule.

Une étape 36 correspond à une détermination de l'état courant du freinage du véhicule. Une telle étape mesure ou détermine la puissance de freinage courant à un instant donné, de sorte à déterminer le point de départ de la puissance de freinage à fournir pour répondre à la demande de ralentissement.

Le deuxième groupe 30 d'étapes de calcul comprend une pluralité d'étapes individuelles opérées en série ou simultanément. Une étape 37 calcule la puissance de freinage récupératif maximum que peut fournir le dispositif de récupération d'énergie. Cette étape de calcul 37 utilise les données issues de l'étape 33 de détermination de l'état des systèmes de freinage combinées aux données issues de l'étape 34 de limitation de la demande de ralentissement 32.

A l'étape 38, il est vérifié si le dispositif de récupération d'énergie est disponible, ou si la puissance de freinage récupératif à atteindre est inférieure au premier seuil décrit plus haut, ou encore si la batterie est chargée. Si le résultat de cette comparaison amène à la conclusion que le dispositif de récupération d'énergie n'a pas besoin d'être activé, celui-ci est placé en un mode d'arrêt par une étape référencée 39. Une étape 40 appartenant au troisième groupe 31 d'étapes vérifie l'arrêt effectif du dispositif de récupération d'énergie.

A l'étape 41, on calcule la puissance de freinage récupératif que le dispositif de récupération d'énergie doit générer pour opérer la décélération demandée, dite puissance de freinage récupératif à atteindre. Cette étape 41 est opérée sur ordre de l'étape 38, quand il est déterminé que le dispositif de récupération d'énergie peut être activé.

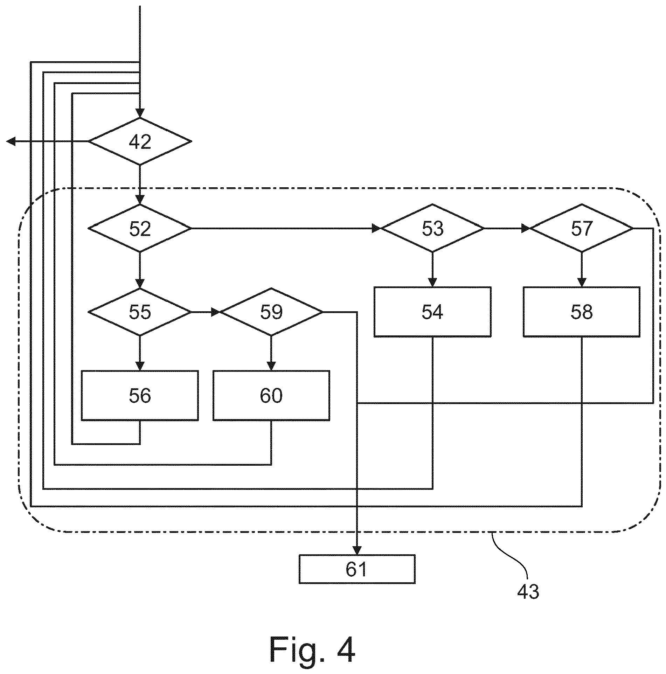

L'étape 42 compare cette puissance de freinage récupératif à atteindre avec la puissance courante à un instant donné du dispositif de récupération d'énergie, telle que déterminée à l'étape 35. Si le résultat de cette comparaison est différent de zéro, il est alors opéré une étape 43 de pilotage de la puissance de freinage récupératif récupérée par le dispositif de récupération d'énergie. Cette étape 43 comprend une série de comparaisons qui seront abordées en détails à la description de la figure 4. Si le résultat de cette comparaison est égal à zéro, une étape 44 de vérification des consignes est opérée, cette étape étant décrite ultérieurement. De même, si le résultat de cette comparaison est égal à zéro, il est alors considéré que le dispositif de récupération d'énergie est piloté au niveau qui convient pour fournir la puissance de freinage demandée par la demande de ralentissement.

Dans le deuxième groupe d'étapes 30 est prévue une étape 45 qui correspond à une détermination de la puissance de freinage correspondant à la demande de ralentissement. Cette dernière reçoit une donnée issue de l'étape 33 de détermination de l'état des systèmes de freinage combinée à une donnée issue de l'étape 34 de limitation de la demande de ralentissement. Cette puissance de freinage calculée à l'étape 45 peut être déterminée par la force d'appui du conducteur sur la pédale de frein et/ou une pression dans le circuit de freinage et/ou une distance par rapport à un objet combinée à la vitesse courante du véhicule, notamment.

A l'étape 46, il est opéré une comparaison entre la puissance courante du dispositif de récupération d'énergie déterminée à l'étape 35 et la puissance de freinage correspondant à la phase de décélération, par exemple via la demande de ralentissement déterminée à l'étape 45. La puissance courante du dispositif de récupération d'énergie peut être égale à la puissance de freinage récupératif maximum que le dispositif de récupération d'énergie peut fournir, en fonction du pilotage opéré par l'étape 43.

Si le résultat de cette comparaison montre que la puissance de freinage mise à disposition par le dispositif de récupération d'énergie à l'étape 35 est supérieure ou égale à la puissance de freinage correspondant à la phase de décélération, notamment via la demande de ralentissement déterminée à l'étape 45, le système de freinage classique du véhicule est alors désactivé à l'étape 47. Une étape 48 de vérification des consignes est opérée, cette étape étant décrite ultérieurement.

Si le résultat de cette comparaison montre que la puissance de freinage correspondant à la demande de ralentissement déterminée à l'étape 45 est supérieure à la puissance de freinage récupératif maximum que le dispositif de récupération d'énergie peut fournir, tel que déterminée à l'étape 41, une étape 49 active au moins un organe de freinage classique qui équipe le véhicule. Une étape 50 de vérification des consignes est opérée, cette étape étant décrite ultérieurement.

Le troisième groupe 31 d'étapes de vérification de l'atteinte des consignes sont des étapes consistant à vérifier que l'action demandée à l'étape qui précède est bien réalisée.

L'étape 40 vérifie l'arrêt effectif du dispositif de récupération d'énergie après la demande de passage en mode arrêt opérée par l'étape 39. L'étape 44 vérifie que la comparaison objet de l'étape 42 est toujours égale à zéro de sorte que le pilotage du dispositif de récupération d'énergie n'est pas opéré. L'étape 48 vérifie la désactivation effective du l'organe de freinage classique qui équipe le véhicule. L'étape 50 vérifie l'atteinte de la consigne de freinage qui correspond à la demande de ralentissement déterminée à l'étape 45.

L'exemple de mise en oeuvre du procédé tel que décrit ci-dessus se termine par une étape de fin référencée 51.

La figure 4 montre en détails le processus de pilotage qui se déroule à l'étape 43 de pilotage de la puissance récupérée par le dispositif de récupération d'énergie. L'étape 42 compare la puissance de freinage récupératif à atteindre de l'étape 41 avec la puissance de freinage courant déterminée à l'étape 36. Comme le résultat de cette comparaison est différent de zéro, on met en oeuvre l'étape 43 de pilotage du dispositif de récupération d'énergie. Le dispositif de récupération d'énergie est ainsi placé en mode de récupération d'énergie par le dispositif de pilotage, le véhicule étant en phase de décélération.

Cette étape 43 comprend ainsi une sous-étape 52 de comparaison de la puissance de freinage récupératif à atteindre avec la puissance de freinage courant. Si le résultat de cette comparaison montre que la puissance de freinage récupératif à atteindre est inférieure à la puissance de freinage courant, une sous-étape 53 est mise en oeuvre. Cette dernière consiste en une vérification de l'état du dispositif de pilotage, en particulier du circuit de contournement du dispositif de récupération d'énergie. Il est ainsi vérifié la position de la valve de contrôle de la circulation de gaz d'échappement dans la conduite constitutive du circuit de contournement. Si la sous-étape 53 détermine que la valve de contrôle est intégralement fermée, cela signifie que la totalité du débit de gaz d'échappement est alors envoyé vers la turbine du dispositif de récupération d'énergie. Selon un exemple de mise en oeuvre et dans le cas où le dispositif de pilotage comprend seulement un circuit de contournement du dispositif de récupération d'énergie, l'étape 43 de pilotage peut s'arrêter là et cycler sur l'étape 42.

Si la sous-étape 53 détermine que la valve de contrôle est au moins en partie ouverte, cela signifie qu'une partie des gaz d'échappement contourne la turbine du dispositif de récupération d'énergie, ce qui en réduit la puissance récupérée. Une sous-étape 54 opère alors une fermeture de la valve de contrôle, par exemple par incrément, jusqu'à atteindre la puissance de freinage récupératif calculée à l'étape 41. L'étape 43 de pilotage peut s'arrêter là et cycler sur l'étape 42.

Si le résultat de la comparaison opérée à la sous-étape 52 montre que la puissance de freinage récupératif à atteindre est supérieure à la puissance de freinage courant, une sous-étape 55 est mise en oeuvre. Cette sous-étape 55 vérifie la position de la valve de contrôle de la circulation de gaz d'échappement dans la conduite constitutive du circuit de contournement. Si la sous-étape 55 détermine que la valve de contrôle est intégralement ouverte, cela signifie que la puissance récupérée par le dispositif de récupération d'énergie est réduite au minimum. Selon un exemple de mise en oeuvre et dans le cas où le dispositif de pilotage comprend seulement un circuit de contournement du dispositif de récupération d'énergie, l'étape 43 de pilotage peut s'arrêter là et cycler sur l'étape 42.

Si la sous-étape 55 détermine que la valve de contrôle est au moins en partie fermée, cela signifie qu'une partie des gaz d'échappement entre dans la turbine du dispositif de récupération d'énergie et génère un freinage. Une sous-étape 56 opère alors une ouverture de la valve de contrôle, par exemple par incrément, jusqu'à générer un freinage minimum, ou en tout cas identique à la puissance de freinage récupératif à atteindre calculée à l'étape 41. L'étape 43 de pilotage peut s'arrêter là et cycler sur l'étape 42.

L'exemple de mise en oeuvre de l'étape 43 exposé ci-dessus utilise comme dispositif de pilotage un circuit de contournement. Les explications fournies ci-dessus sont en tous points transposables à un dispositif de pilotage formé par un ensemble d'ailettes d'une turbine à géométrie variable, tel que détaillé ci-dessus. Dans le cas où la puissance de freinage récupératif doit être augmentée, les ailettes de la turbine à géométrie variable sont fermées, par exemple par incrément. Dans le cas contraire, les ailettes de la turbine à géométrie variable sont ouvertes, par exemple par incrément.

L'exemple de la figure 4 montre un procédé appliqué à un dispositif de pilotage comprenant à la fois un circuit de contournement et un ensemble d'ailettes d'une turbine à géométrie variable. Au surplus des sous-étapes 52 à 56 présentées ci-dessus, il est prévu une sous-étape 57 qui vise à déterminer la position de l'ensemble d'ailettes de la turbine à géométrie variable. Cette sous-étape 57 est placée sous la dépendance de la sous-étape 56 exposée ci-dessus. Si la sous-étape 57 détermine que l'ensemble d'ailettes est intégralement fermée, alors l'étape 43 de pilotage se termine par une étape de vérification et de diagnostique 61 du dispositif de récupération d'énergie.

En revanche, si la sous-étape 57 détermine que l'ensemble d'ailettes est au moins en partie ouvert, une sous-étape 58 est opérée pour fermer l'ensemble d'ailettes, par exemple par incrément jusqu'à atteindre la puissance de freinage récupératif calculée à l'étape 41. L'étape 43 de pilotage peut s'arrêter là et cycler sur l'étape 42.

Une sous-étape 59, placée sous la dépendance de la sous-étape 55, prévoit une détermination de la position de l'ensemble d'ailettes de la turbine à géométrie variable. Si la sous-étape 59 détermine que l'ensemble d'ailettes est intégralement ouvert, alors l'étape 43 de pilotage se termine par l'étape de vérification et de diagnostique 61 du dispositif de récupération d'énergie.

En revanche, si la sous-étape 59 détermine que l'ensemble d'ailettes est au moins en partie fermé, une sous-étape 60 est mise en oeuvre pour ouvrir l'ensemble d'ailettes, par exemple par incrément, jusqu'à atteindre la puissance de freinage récupératif calculée à l'étape 41. L'étape 43 de pilotage peut s'arrêter là et cycler sur l'étape 42.

Selon cet exemple de mise en oeuvre, le pilotage du dispositif de récupération d'énergie est en premier lieu opéré par le circuit de contournement, puis dans un second temps par l'ensemble d'ailettes de la turbine à géométrie variable. Dans les sous-étapes 58 et 60, le dispositif de pilotage, par exemple l'ensemble d'ailettes, génère un différentiel ou rapport de pressions entre une première pression de gaz d'échappement en amont du dispositif de récupération d'énergie et une deuxième pression de gaz d'échappement en aval du dispositif de récupération d'énergie.

La description qui précède explique clairement comment l'invention permet d'atteindre les objectifs qu'elle s'est fixée et notamment de proposer un procédé et un système de récupération d'énergie sur les gaz d'échappement, opéré pendant les phases de décélération d'un véhicule et participant au freinage du véhicule.

L'invention ne saurait se limiter aux modes de réalisation spécifiquement donnés dans ce document à titre d'exemples non limitatifs, et s'étend en particulier à tous moyens équivalents et à toute combinaison techniquement opérante de ces moyens.

## Revendications

1. Procédé de récupération d'énergie destiné à être appliqué à un véhicule équipé d'un moteur à combustion interne (3), au cours duquel au moins un dispositif de récupération d'énergie (15) est mis en oeuvre par des gaz d'échappement (63) du moteur à combustion interne (3), le dispositif de récupération d'énergie (15) comprenant au moins une turbine (18) entrainée en rotation par les gaz d'échappement (63) et un générateur électrique (19) opéré par la turbine (18), et où un dispositif de pilotage (22) contrôle le dispositif de récupération d'énergie (15), **caractérisé en ce que** le dispositif de récupération d'énergie (15) est placé en un mode de récupération d'énergie par le dispositif de pilotage (22) quand le véhicule est en phase de décélération.

2. Procédé selon la revendication 1, au cours duquel la phase de décélération est détectée par une demande de ralentissement (32) du véhicule et optionnellement la demande de ralentissement (32) provient d'une commande d'un organe de freinage du véhicule et/ou la demande de ralentissement (32) provient d'un système de géolocalisation équipant le véhicule et/ou la demande de ralentissement (32) provient d'un dispositif de détection d'obstacle connecté au véhicule.

3. Procédé selon la revendication précédente, dans lequel le dispositif de pilotage (22) contrôle un débit de gaz d'échappement (63) circulant dans le dispositif de récupération d'énergie (15).

4. Procédé selon l'une quelconque des revendications précédentes, dans lequel le dispositif de pilotage (22) contrôle le dispositif de récupération d'énergie (15) par un différentiel de pressions entre une première pression de gaz d'échappement (63) en amont du dispositif de récupération d'énergie (15) et une deuxième pression de gaz d'échappement (63) en aval du dispositif de récupération d'énergie (15).

5. Procédé selon l'une quelconque des revendications précédentes, comprenant une étape (33, 34, 35, 36) de détermination de l'état opérationnel de l'un quelconque des composants ci-dessous :
a. un système de freinage du véhicule,
b. le dispositif de récupération d'énergie (15),
c. un système de limitation du freinage du véhicule.

6. Procédé selon l'une quelconque des revendications précédentes, au cours duquel on détermine une puissance de freinage récupératif à atteindre (25) par le dispositif de récupération d'énergie (15) pour ralentir le véhicule selon la demande de ralentissement (32).

7. Procédé selon la revendication précédente, au cours duquel le dispositif de récupération d'énergie (15) est placé en un mode d'arrêt par le dispositif de pilotage (22) si la puissance de freinage récupératif à atteindre (25) est inférieure à un premier seuil (26) et optionnellement le dispositif de récupération d'énergie (15) est placé en mode de récupération d'énergie par le dispositif de pilotage (22) si la puissance de freinage récupératif à atteindre (25) est supérieure au premier seuil (26).

8. Procédé selon l'une des revendications 6 et 7, au cours duquel on contrôle le dispositif de récupération d'énergie (15) par le dispositif de pilotage (22) pour que sa puissance de freinage récupératif courant soit égale à la puissance de freinage récupératif à atteindre (25).

9. Procédé selon l'une quelconque des revendications précédentes, au cours duquel on compare une puissance de freinage récupératif maximum (28) que le dispositif de récupération d'énergie (15) est apte à fournir avec une puissance de freinage correspondant à la phase de décélération et on active au moins un organe de freinage du véhicule si la puissance de freinage récupératif maximum (28) que le dispositif de récupération d'énergie peut fournir est inférieure à la puissance de freinage correspondant à la phase de décélération et optionnellement on interdit l'activation d'au moins un organe de freinage du véhicule si la puissance de freinage récupératif maximum (28) que le dispositif de récupération d'énergie peut fournir est supérieure à la puissance de freinage correspondant à la phase de décélération.

10. Système récupératif d'énergie pour un véhicule équipé d'un moteur à combustion interne (3), comprenant au moins un dispositif de récupération d'énergie (15) mis en oeuvre par des gaz d'échappement (63) du moteur à combustion interne (3), le dispositif de récupération d'énergie (15) comprend au moins une turbine (18) agencée pour être placée dans un flux des gaz d'échappement (63) et un générateur électrique (19) relié à la turbine (18), et un dispositif de pilotage (22) du dispositif de récupération d'énergie (15), **caractérisé en ce qu'**il comprend un module de contrôle (17) configuré pour recevoir une demande de ralentissement (32) du véhicule et pour envoyer une demande de récupération d'énergie par le dispositif de récupération d'énergie (15).

11. Système selon la revendication précédente, dans lequel la turbine (18) est une turbine à géométrie variable comprenant un ensemble d'ailettes, cet ensemble d'ailettes formant au moins en partie le dispositif de pilotage (22).

12. Système selon l'une des revendications 10 à 11, dans lequel le dispositif de pilotage (22) comprend au moins un circuit de contournement du dispositif de récupération d'énergie (15) apte à être parcouru par au moins une partie des gaz d'échappement (63) et optionnellement le circuit de contournement comprend au moins une conduite et une valve de contrôle de la circulation de gaz d'échappement (63) dans la conduite.

13. Système selon l'une quelconque des revendications 10 à 12, dans lequel le dispositif de récupération d'énergie (15) comprend un turbocompresseur (4) dont l'arbre (13) est relié à un générateur électrique (19).

14. Système selon l'une quelconque des revendications 10 à 13, dans lequel le dispositif de récupération d'énergie (15) est configuré pour être installé sur un circuit de gaz d'échappement (63) entre le moteur à combustion interne (3) et un dispositif antipollution (14) des gaz d'échappement (63).

15. Système selon l'une quelconque des revendications 10 à 12, dans lequel le dispositif de récupération d'énergie (15) est configuré pour être installé sur un circuit de gaz d'échappement (63) entre un turbocompresseur (4) et un dispositif antipollution (14) des gaz d'échappement (63), ou entre le moteur à combustion interne (3) et un turbocompresseur (4) ou en aval d'un dispositif antipollution (14) des gaz d'échappement (63), selon le sens de circulation des gaz d'échappement (63) dans le circuit de gaz d'échappement.
